# EUROPÄISCHE PATENTSCHRIFT

(11) **EP 1 023 649 B1**
(45) Veröffentlichungstag und Bekanntmachung des Hinweises auf die Patenterteilung: **29.05.2002**
(21) Anmeldenummer: 98954387.1
(22) Anmeldetag: 09.10.1998
(51) Int. Cl.: G05B 19/4063, G01P 13/00

(54) **VERFAHREN UND SCHALTUNGSANORDNUNG ZUR ÜBERWACHUNG DES BETRIEBSZUSTANDS VON ELEKTROMOTOREN**
METHOD AND CIRCUIT FOR MONITORING THE OPERATING CONDITION OF ELECTRIC MOTORS
PROCEDE ET CIRCUIT POUR SURVEILLER L'ETAT DE FONCTIONNEMENT DE MOTEURS ELECTRIQUES

(30) Priorität: 15.10.1997 DE 19745490
(43) Veröffentlichungstag der Anmeldung: 02.08.2000
(73) Patentinhaber: Dr. Johannes Heidenhain GmbH, 83292 Traunreut (DE)
(72) Erfinder: KERNER, Norbert, D-83374 Traunwalchen (DE)
(86) Internationale Anmeldenummer: EP9806423
(87) Internationale Veröffentlichungsnummer: WO9919781

(56) Entgegenhaltungen:
- EP-A- 0 247 994
- EP-A- 0 658 832
- DE-A- 19 522 447
- DE-C- 4 224 620
- "Contrôleur de rotation minimale" TOUTE L'ELECTRONIQUE, Nr. 406, Januar 1976, Seite 65 XP002094186

## Beschreibung

Die Erfindung betrifft ein Verfahren zur Überwachung des Betriebszustands von Elektromotoren nach Anspruch 1 und eine Schaltungsanordnung zur Durchführung des Verfahrens nach Anspruch 4.

Es ist bekannt, daß bei unterschiedlichsten Werkzeugmaschinen und Bearbeitungszentren zunehmend Sicherheitsfunktionen vorgesehen werden, die auch bei einer Fehlfunktion einer oder mehrerer Baugruppen oder bei einer Fehlbedienung einen in der Regel eingeschränkten Betrieb, einen sicheren Halt oder sicheren Betriebshalt der jeweiligen Maschine gewährleisten. Dadurch sollen Unfälle, bei denen das Werkstück, das Werkzeug oder die Maschine beschädigt oder der Benutzer sogar verletzt werden könnte, zuverlässig verhindert werden. Diese Sicherheitsfunktionen werden zur Vermeidung kostspieliger zusätzlicher Anordnungen in die Steuereinheit der Maschine integriert.

Damit die Steuereinheit der Maschine sicher erkennen kann, wann eine Sicherheitsfunktion ausgeführt werden muß, werden auch die für die Sicherheit relevanten Funktionen und Parameter sicher überwacht. Dafür ist es erforderlich, daß zwei unabhängige Prozessoren die Überwachung gleichzeitig durchführen.

Dabei ist von Nachteil, daß bisher nur die sichere Verarbeitung und die sichere Weiterleitung der von einem Elektromotor erhaltenen oder zu einem Elektromotor übertragenen Signale überwacht wird. Sollten im Elektromotor selbst Betriebszustände auftreten, die zu einem unsicheren Betriebszustand der gesamten Maschine führen, kann dies in der Steuereinheit nicht erkannt werden, da in diesem Fall keine fehlerhafte Verarbeitung oder Übertragung vorliegt.

Aus der EP 0 658 832 A2 ist bekannt bei einer Werkzeugmaschine oder einem Roboter die mechanisch zulässigen Verfahrbereiche ohne den Einsatz von mechanischen Endschaltern zu überwachen, indem aus den Ausgangssignalen jeder der Positionserfassungseinrichtungen die jeweilige Antriebsposition gesondert bestimmt wird. Diese Antriebspositionen werden dann in jedem der beiden vorhandenen Prozessorsysteme unabhängig auf Gleichheit und das Einhalten eines vorgebbaren Positionsbereichs überwacht. Bei einer Ungleichheit wird ein Störungssignal ausgegeben.

Somit wird hier nicht die Überwachung eines sicheren Betriebszustands von Elektromotoren überwacht. Weiterhin ist von Nachteil, daß dabei Störungen in zum Antrieb benutzten Elektromotoren nur unzuverlässig erkannt werden können.

Es stellt sich somit die Aufgabe, ein Verfahren und eine Schaltungsanordnung anzugeben, durch die eine Steuereinheit einer Werkzeugmaschine oder eines Roboters sicher erkennen kann, ob die von der Steuereinheit geregelten Elektromotoren sich in einem sicheren Betriebszustand befinden.

Diese Aufgabe wird durch die in Anspruch 1 und Anspruch 4 angegebenen Merkmale gelöst.

Das erfindungsgemäße Verfahren weist den Vorteil auf, daß zusätzlich zur Überwachung der Übertragung und Ermittlung des Regelungssignals auch das Ausgangssignal des Drehgebers des Elektromotors überwacht wird. Dadurch kann auch dann keine Gefahr für Benutzer oder Maschine entstehen, wenn in einem Drehgeber oder einem Elektromotor eine Fehlfunktion auftritt, die beispielsweise den Stillstand des Elektromotors verursacht oder eine Auswertung des Ausgangssignals des Drehgebers verhindert.

Die Erfindung wird im folgenden anhand der in der Zeichnung dargestellten Ausführungsformen näher erläutert. Es zeigt:
- Fig. 1:: eine mögliche Realisierungsform der erfindungsgemäßen Anordnung und
- Fig. 2:: einen möglichen Programmablaufplan für das erfindungsgemäße Verfahren.

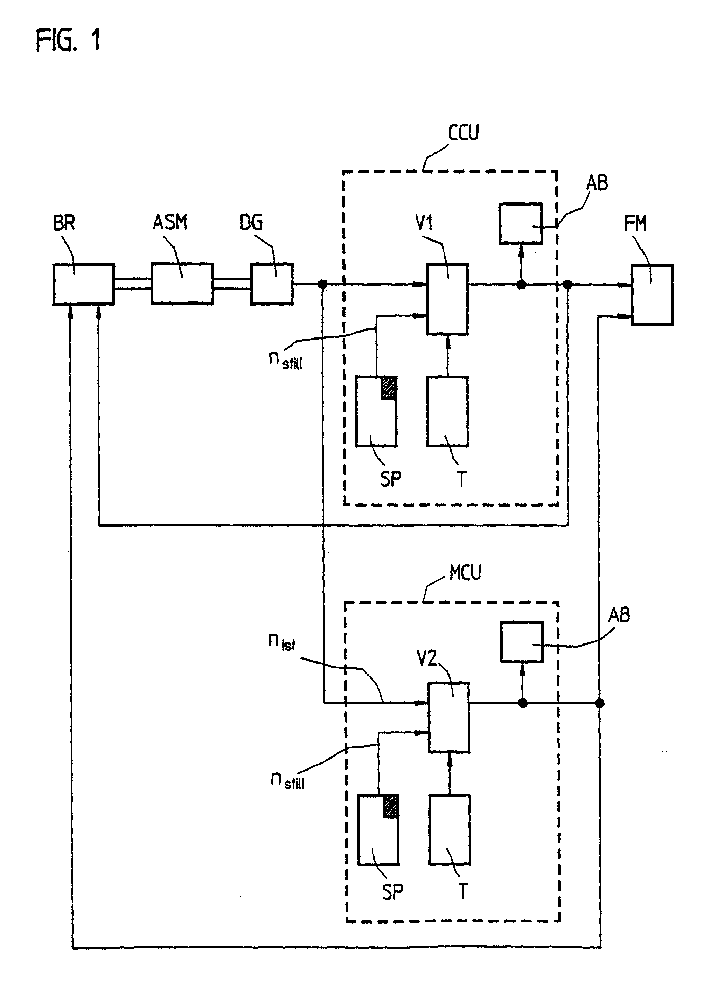

In Fig. 1 sind nur die für die Erfindung relevanten Baugruppen einer erfindungsgemäßen Werkzeugmaschine dargestellt. Zur Vereinfachung wird im folgenden nur von einem Elektromotor ASM ausgegangen, die erfindungsgemäße Überwachung erfolgt aber für alle Achsmotoren und den Spindelmotor einer beliebigen Werkzeugmaschine. Die Überwachung des Stillstands erfolgt insbesondere bei Asynchronmotoren ASM, da speziell bei dieser Motorenart auch bei Ausfall des Drehgebersignals eine dauerhafte und unkontrollierte Bewegung erfolgen kann.

Im einzelnen ist in Fig. 1 die zweikanalige Struktur zur Überwachung des Stillstands eines Elektromotors ASM dargestellt. Die beiden Kanäle sind dabei völlig unabhängig voneinander realisiert. Vorzugsweise erfolgt die Stillstandsüberwachung dann, wenn der erste Prozessor CCU aufgrund anderer Funktionen ohnehin den für den Elektromotor ASM maximal zulässigen Momentenstrom als Sollwert iₛₒₗₗ ausgibt. Durch den Momentenstrom wird im Elektromotor ASM ein dazu proportionales Drehmoment verursacht. Die Summe aus Momentenstrom und Magnetisierungsstrom, der zu Verlustleistung führt, ergibt sich der insgesamt dem Elektromotor ASM zugeleitete Motorstrom. Die Überwachung kann gleichzeitig zu anderen Funktionen erfolgen, die dadurch nicht beeinflußt werden, so daß der Benutzer die Überwachung nicht bemerkt und sie auch keinen speziellen Zeitaufwand benötigt.

Generell kann der Betriebszustand eines Elektromotors ASM immer dann ermittelt werden, wenn der Momentenstrom erhöht wird, so daß sich auch die Drehzahl proportional dem Momentenstrom erhöhen muß. Im folgenden Ausführungsbeispiel wird davon ausgegangen, daß der Elektromotor ASM von Drehzahl Null aus mit maximal zulässigem Momentenstrom gestartet wird.

Sobald die Drehzahl des Elektromotors ASM Null ist und in dem ersten Kanal durch einen ersten Prozessor CCU, der ohnehin bereits den Momentenstrom regelt, ein möglichst großer Sollwert iₛₒₗₗ für den Momentenstrom an den Regelkreis des Elektromotors ASM ausgegeben wird, erfolgt eine erfindungsgemäße Drehzahlüberwachung. Dabei wird die Istdrehzahl nᵢₛₜ des Elektromotors ASM durch einen Drehgeber DG ermittelt und mit einer Stillstandsdrehzahl nₛₜᵢₗₗ verglichen. Die Stillstandsdrehzahl nₛₜᵢₗₗ ist beispielsweise in dem ersten Prozessor CCU oder einem separaten Speicher SP abgespeichert und damit für einen Elektromotor ASM fest vorgegeben. Die Stillstandsdrehzahl nₛₜᵢₗₗ weist einen Wert auf, der geringfügig größer Null ist und bei dem faktisch von einem Stillstand des Elektromotors ASM ausgegangen werden kann, z.B. 10 Umdrehungen pro Minute. Wird bei dem anschließenden Vergleich im ersten Prozessor CCU oder in einer speziellen Vergleicherbaugruppe V1 festgestellt, daß die Istdrehzahl nᵢₛₜ größer als die Stillstandsdrehzahl nₛₜᵢₗₗ ist, liegt keine Fehlfunktion vor und der Elektromotor ASM befindet sich in einem sicheren Betriebszustand.

Falls die Istdrehzahl nᵢₛₜ kleiner als die Stillstandsdrehzahl nₛₜᵢₗₗ ist, wird durch die Vergleicherbaugruppe V1 oder den ersten Prozessor CCU in einem Timer T ein Testintervall gestartet, das ca. 200 ms läuft. Der Timer T kann sowohl als separate Baugruppe als auch integriert in den ersten Prozessor CCU ausgeführt werden. In dem Testintervall wird permanent überprüft, ob die Istdrehzahl nᵢₛₜ weiterhin kleiner als die Stillstandsdrehzahl nₛₜᵢₗₗ bleibt. Wenn dies nicht der Fall ist, also die Istdrehzahl nᵢₛₜ im Testintervall die Stillstandsdrehzahl nₛₜᵢₗₗ überschreitet, wird ebenfalls keine Fehlfunktion des Elektromotors ASM erkannt, d.h. der Elektromotor ASM befindet sich auch in diesem Fall in einem sicheren Betriebszustand. Dabei kann die Dauer des Testintervalls abhängig vom Momentenstrom und dem Trägheitsmoment des Elektromotors ASM gewählt werden.

Bleibt die Istdrehzahl nᵢₛₜ im gesamten Testintervall kleiner als die Stillstandsdrehzahl nₛₜᵢₗₗ, so wird durch den ersten Prozessor CCU ein Fehler erkannt. Zur Vermeidung von Schäden wird dann der gesamte Motorstrom durch den ersten Prozessor CCU ausgeschaltet, die betreffende Achse wird durch eine Bremse BR mechanisch gebremst und es wird eine Fehlermeldung an den Benutzer ausgegeben. Der erkannte Fehler kann dabei durch eine Störung bei der Ermittlung der Drehzahl des Elektromotors ASM, einen Kurzschluß im Elektromotor ASM, durch einen Fehler im Umrichter oder Leistungsverstärker oder auch durch andere Ursachen hervorgerufen werden.

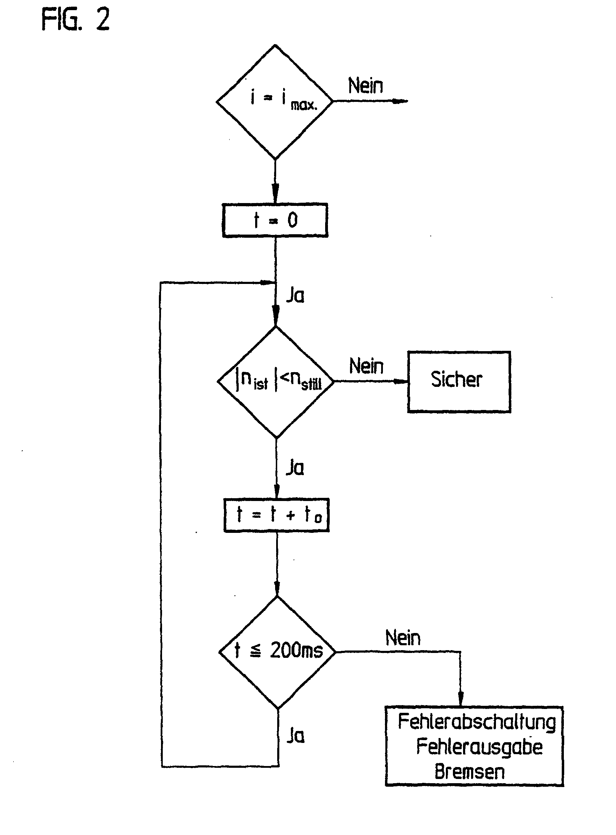

In Fig. 2 ist ein Ablaufplan des Verfahrens dargestellt. In einem ersten Schritt wird überprüft, ob der Betrag der Istdrehzahl nᵢₛₜ kleiner als die Stillstandsdrehzahl nₛₜᵢₗₗ ist. Aufgrund der Betragsbildung bei dem Vergleich können beide möglichen Drehrichtungen eines Elektromotors ASM berücksichtigt werden. Falls der Betrag der Istdrehzahl nᵢₛₜ größer als die Stillstandsdrehzahl nₛₜᵢₗₗ ist, wird erkannt, daß der Elektromotor ASM anläuft und somit ein sicherer Betriebszustand vorliegt. Ist der Betrag der Istdrehzahl nᵢₛₜ kleiner als die Stillstandsdrehzahl nₛₜᵢₗₗ wird während einem Testintervall überprüft, ob die Istdrehzahl nᵢₛₜ auch bei maximalem Momentenstrom weiterhin kleiner der Stillstandsdrehzahl nₛₜᵢₗₗ bleibt. Ist dies nicht der Fall, wird wiederum ein sicherer Betriebszustand erkannt.

Wenn aber auch am Ende des Testintervalls erkannt wird, daß die Istdrehzahl nᵢₛₜ kleiner der Stillstandsdrehzahl nₛₜᵢₗₗ ist, wird der Motorstrom des Elektromotors ASM vom ersten Prozessor CCU auf Null begrenzt, der Elektromotor ASM durch mechanische Bremsen BR abgebremst und an den Benutzer eine Fehlermeldung ausgegeben.

Obwohl die Istdrehzahl nᵢₛₜ als kleiner der Stillstandsdrehzaht nₛₜᵢₗₗ erkannt wurde, ist es dennoch erforderlich, daß die als fehlerhaft erkannte Achse mechanisch abgebremst wird, da eine Fehlfunktion des Drehgebers DG vorliegen könnte und der Elektromotor ASM sich tatsächlich drehen könnte.

Unabhängig von diesem ersten Kanal ist ein zweiter Kanal schaltungstechnisch realisiert, der einen zweiten Prozessor MCU aufweist, wie in Fig. 1 dargestellt. Der zweite Prozessor MCU weist zum gleichen Drehgeber DG, mit dem auch der erste Prozessors CCU verbunden ist, eine Verbindung auf. Dadurch erhält auch der zweite Prozessor MCU Informationen über die Istdrehzahl nᵢₛₜ des Elektromotors ASM. Um dennoch voneinander unabhängige Informationen über die Drehzahl des Elektromotors ASM zu erhalten, können bei Verwendung eines Drehgebers mit unterschiedlichen Erfassungssystemen für die Drehzahl, an jeden Prozessor das Ausgangssignal jeweils eines Erfassungssystems weitergeleitet werden.

Sobald bei Drehzahl Null ein maximaler Momentenstrom durch die Steuerung eingestellt wird, erfolgt auch in dem zweiten Prozessor MCU ein Vergleich zwischen der Stillstandsdrehzahl nₛₜᵢₗₗ die auch von dem ersten Prozessor CCU benutzt wird, und der Istdrehzahl nᵢₛₜ, die durch den Drehgeber DG ermittelt wurde. Hierfür wird dem zweiten Prozessor MCU vom ersten Prozessor CCU übermittelt, wann dem Elektromotor ASM ein maximaler Momentenstrom zugeleitet wird. Falls die mittels Drehgeber DG ermittelte Istdrehzahl nᵢₛₜ des Elektromotors ASM über der Stillstandsdrehzahl nₛₜᵢₗₗ liegt, wird ein sicherer Betriebszustand erkannt.

Im anderen Fall wird ein Timer T durch die Vergleichseinrichtung gestartet. Während dem durch den Timer T definierten Testintervall wird weiterhin durch den zweiten Prozessor MCU überprüft, ob die Istdrehzahl nᵢₛₜ weiterhin kleiner als die Stillstandsdrehzahl nₛₜᵢₗₗ ist. Ist dies nicht der Fall, wird wiederum ein sicherer Betriebszustand erkannt.

Für den Fall, daß die Istdrehzahl nᵢₛₜ auch am Ende des Testintervalls kleiner als die Stillstandsdrehzahl nₛₜᵢₗₗ ist, wird eine Fehlfunktion erkannt und der Strom für den Elektromotor ASM ausgeschaltet, eine Fehlermeldung an den Benutzer ausgegeben, sowie der Elektromotor ASM mittels einer mechanischen Bremse BR abgebremst.

## Patentansprüche

1. Verfahren zur Überwachung des Betriebszustands eines Elektromotors, bei dem ein Ausgangssignal eines Drehgebers (DG) von einem ersten Prozessor (CCU) und einem zweiten Prozessor (MCU) ausgewertet wird, **dadurch gekennzeichnet, daß** eine Drehzahländerung des Elektromotors (ASM) aufgrund einer Änderung eines Momentenstroms des Elektromotors (ASM) durch beide Prozessoren (CCU, MCU) ermittelt wird, daß ein sicherer Betriebszustand erkannt wird, wenn der Betrag der Drehzahländerung durch beide Prozessoren (CCU, MCU) als über einem Mindestwert für die Drehzahländerung liegend erkannt wird und daß Maßnahmen zur Herstellung eines sicheren Betriebszustands durchgeführt werden, wenn der Betrag der Drehzahländerung durch mindestens einen der beiden Prozessoren (MCU oder CCU) als zu gering erkannt wird.

2. Verfahren nach Anspruch 1, **dadurch gekennzeichnet, daß** zur Herstellung eines sicheren Betriebszustands der Strom des Elektromotors (ASM) ausgeschaltet, an den Benutzer eine Fehlermeldung ausgegeben und der Elektromotor (ASM) abgebremst wird.

3. Verfahren nach Anspruch 1 oder 2, **dadurch gekennzeichnet, daß** in einem Testintervall die Istdrehzahl (nᵢₛₜ) an beide Prozessoren (CCU, MCU) weitergeleitet wird, wenn dem Elektromotor (ASM) bei einer Istdrehzahl (nᵢₛₜ), die geringer als eine gespeicherte Stillstandsdrehzahl (nₛₜᵢₗₗ) ist, ein großer Momentenstrom zugeleitet wird, daß in beiden Prozessoren (CCU, MCU) die Istdrehzahl (nᵢₛₜ) mit einer Stillstandsdrehzahl (nₛₜᵢₗₗ) verglichen wird und daß ein sicherer Betriebszustand erkannt wird, wenn die Istdrehzahl (nᵢₛₜ,) die Stillstandsdrehzahl (nₛₜᵢₗₗ) im Testintervall überschreitet und daß Maßnahmen zur Herstellung eines sicheren Betriebszustands durchgeführt werden, wenn die Istdrehzahl (nᵢₛₜ) die Stillstandsdrehzahl (nₛₜᵢₗₗ) im Testintervall nicht überschreitet.

4. Schaltungsanordnung zur Überwachung des Betriebszustands eines Elektromotors, welche einen Drehgeber (DG) aufweist, der mit dem Elektromotor (ASM) mechanisch und mit zwei Prozessoren (CCU, MCU) elektrisch verbunden ist, **dadurch gekennzeichnet, daß** das Ausgangssignal des Drehgebers (DG) zwei unabhängigen Vergleichern (V1, V2) zugeleitet wird, daß beide Vergleicher (V1, V2) mit einem Timer (T) verbunden sind, daß beide Vergleicher (V1, V2) mit einem Speicher (SP) verbunden sind und daß die Ausgangssignale der Vergleicher (V1, V2) je einer Baugruppe (AB) zur Fehlerabschaltung und beiden Prozessoren (CCU, MCU) zugeleitet werden.

5. Schaltungsanordnung nach Anspruch 4, **dadurch gekennzeichnet, daß** ein Vergleicher (V1) in dem ersten Prozessor (CCU) und ein Vergleicher (V2) in dem zweiten Prozessor (MCU) integriert ausgeführt sind und daß Timer (T) und Speicher (SP) jeweils im Prozessor (CCU, MCU) integriert ausgeführt sind.

6. Schaltungsanordnung nach Anspruch 4 oder 5, **dadurch gekennzeichnet, daß** für jeden Vergleicher (V1, V2) ein Timer (T) und Speicher (SP) vorgesehen ist und daß Timer (T) und Speicher (SP) im gleichen Prozessor (CCU, MCU) integriert sind, wie der zugehörige Vergleicher (V1, V2).

7. Schaltungsanordnung nach einem der Ansprüche 4 bis 6, **dadurch gekennzeichnet, daß** beide Prozessoren (CCU, MCU) mit einer mechanischen Bremse (BR), einer Baugruppe (FM) zur Ausgabe einer Fehlermeldung und einer Baugruppe (AB) zur Abschaltung des Motorstroms verbunden sind.

## Claims

1. Method for monitoring the operational state of an electric motor, in which an output signal of an angle encoder (DG) is evaluated by a first processor (CCU) and a second processor (MCU), **characterised in that** a change in the number of revolutions of the electric motor (ASM) is detected by both processors (CCU, MCU) on the basis of a change in a torque current of the electric motor (ASM), **in that** a safe operational state is detected if the amount of the change in the number of revolutions is detected by both processors (CCU, MCU) as being above a minimum value for the change in the number of revolutions and **in that** measures for producing a safe operational state are implemented if the amount of the change in the number of revolutions is detected as being too low by at least one of the two processors (MCU or CCU).

2. Method according to claim 1, **characterised in that**, in order to produce a safe operational state, the current of the electric motor (ASM) is switched off, an error message is transmitted to the user and the electric motor (ASM) is braked.

3. Method according to claim 1 or 2, **characterised in that**, in a test interval, the actual number of revolutions (nᵢₛₜ) is transmitted to both processors (CCU, MCU) if a large torque current is supplied to the electric motor (ASM) in the case of an actual number of revolutions (nᵢₛₜ) which is less than a stored number of revolutions (nₛₜᵢₗₗ) at stoppage, **in that** the actual number of revolutions (nᵢₛₜ) is compared with a number of revolutions (nₛₜᵢₗₗ) at stoppage in both processors (CCU, MCU) and **in that** a safe operational state is detected if the actual number of revolutions (nᵢₛₜ)exceeds the number of revolutions (nₛₜᵢₗₗ) at stoppage in the test interval and **in that** measures for producing a safe operational state are implemented if the actual number of revolutions (nᵢₛₜ) does not exceed the number of revolutions (nₛₜᵢₗₗ) at stoppage in the test interval.

4. Circuit arrangement for monitoring the operational state of an electric motor which has an angle encoder (DG) which is mechanically connected to the electric motor (ASM) and electrically connected to two processors (CCU, MCU), **characterised in that** the output signal of the angle encoder (DG) is supplied to two independent comparators (V1, V2), **in that** both comparators (V1, V2) are connected to a timer (T), **in that** both comparators (V1, V2) are connected to a memory (SP) and **in that** the output signals of the comparators (V1, V2) are respectively supplied to a subassembly (AB) for shut-off in case of error and to both processors (CCU, MCU).

5. Circuit arrangement according to claim 4, **characterised in that** one comparator (V1) is embodied integrated in the first processor (CCU) and one comparator (V2) is embodied integrated in the second processor (V2) and **in that** the timer (T) and the memory (SP) are respectively embodied integrated in the processor (CCU, MCU).

6. Circuit arrangement according to claim 4 or 5, **characterised in that** a timer (T) and a memory (SP) are provided for each comparator (V1, V2) and **in that** the timer (T) and the memory (SP) are integrated in the same processor (CCU, MCU) as the associated comparator (V1, V2).

7. Circuit arrangement according to one of the claims 4 to 6, **characterised in that** both processors (CCU, MCU) are connected to a mechanical brake (BR), a subassembly (FM) for issuing an error message and a subassembly (AB) for switching off the motor current.

## Revendications

1. Procédé pour surveiller l'état de fonctionnement d'un moteur électrique, dans lequel un signal de sortie d'un transmetteur de vitesse (DG) est traité par un premier processeur (CCU) et un deuxième processeur (MCU), **caractérisé en ce qu'**une variation de vitesse du moteur électrique (ASM) est déterminée par les deux processeurs (CCU, MCU), sur la base d'une variation d'un courant de couple du moteur électrique (ASM), **en ce qu'**un état de fonctionnement sûr est détecté lorsque la valeur de la variation de vitesse dans les deux processeurs (CCU, MCU) est supérieure une valeur minimale pour la variation de vitesse et **en ce que** des dispositions pour établir un état de fonctionnement sûr sont mises en oeuvre lorsque la valeur de la variation de vitesse est considérée trop faible par au moins l'un des deux processeurs (MCU ou CCU).

2. Procédé selon la revendication 1, **caractérisé en ce que** pour établir un état de fonctionnement sûr, on coupe le courant du moteur. électrique (ASM), on délivre un message de défaut l'utilisateur et on freine le moteur électrique (ASM).

3. Procédé selon la revendication 1 ou 2, **caractérisé en ce que** dans un intervalle de test, la vitesse de rotation réelle (nᵢₛₜ) est transmise aux deux processeurs (CCU, MCU) lorsque le moteur électrique (ASM) pour une vitesse de rotation réelle (nᵢₛₜ) qui est inférieure une vitesse d'arrêt (nₛₜᵢₗₗ) mémorisée, reçoit un courant de couple élevé, **en ce que** la vitesse de rotation réelle (nᵢₛₜ) est comparée une vitesse d'arrêt (nₛₜᵢₗₗ) dans les deux processeurs (CCU, MCU), et **en ce qu'**un état de fonctionnement sûr est détecté lorsque la vitesse de rotation réelle (nᵢₛₜ) est supérieure à la vitesse d'arrêt (nₛₜᵢₗₗ) dans l'intervalle de test et **en ce que** des dispositions pour établir un état de fonctionnement sûr sont mises en oeuvre lorsque la vitesse de rotation réelle ne dépasse pas la vitesse d'arrêt (nₛₜᵢₗₗ) dans l'intervalle de test

4. Agencement de circuit pour la surveillance de l'état de fonctionnement d'un moteur électrique, comportant un transmetteur de vitesse (DG) qui est couplé mécaniquement au moteur électrique (ASM) et est relié électriquement à deux processeurs (CCU, MCU), **caractérisé en ce que** le signal de sortie du transmetteur de vitesse (DG) est transmis à deux comparateurs (V1, V2) indépendants, **en ce que** les deux comparateurs (V1, V2) sont connectés à un circuit d'horloge (T), **en ce que** les deux comparateurs (V1, V2) sont connectés une mémoire (SP) et **en ce que** les signaux de sortie des comparateurs (V1, V2) sont transmis chacun un composant (AB) d'élimination de défaut et aux deux processeurs (CCU, MCU).

5. Agencement de circuit selon la revendication 4, **caractérisé en ce qu'**un comparateur (V1) est intégré dans le premier processeur (CCU) et un comparateur (V2) est intégré dans le second processeur (MCU) et **en ce qu'**un circuit d'horloge (T) et une mémoire (SP) sont intégrés chacun dans le processeur (CCU, MCU).

6. Agencement de circuit selon la revendication 4 ou 5, **caractérisé en ce qu'**il est prévu pour chaque comparateur (V1, V2) un circuit d'horloge (T) et une mémoire (SP) et **en ce que** le circuit d'horloge (T) et la mémoire (SP) sont intégrés dans le même processeur (CCU, MCU).

7. Agencement de circuit selon une des revendications 4 à 6, **caractérisé en ce que** les deux processeurs (CCU, MCU) sont reliés à un frein mécanique (BR), un composant (FM) pour délivrer un message de défaut et un composant (AB) pour couper le courant du moteur.
